# FASCICULE DE BREVET EUROPEEN

(11) **EP 2 889 270 B1**
(45) Date de publication et mention de la délivrance du brevet: **10.01.2018**
(21) Numéro de dépôt: 14200216.1
(22) Date de dépôt: 23.12.2014
(51) Int. Cl.: C01G 23/00, C01B 32/00

(54) **Poudre carbonée comprenant un oxyde mixte d'yttrium et de titane**
Kohlenstoffpulver, das ein Oxid gemischt mit Yttrium und Titan enthält
Carbonaceous powder comprising a mixed oxide of yttrium and titanium

(30) Priorité: 27.12.2013 FR 1363666
(43) Date de publication de la demande: 01.07.2015
(73) Titulaire: Commissariat à l'Energie Atomique et aux Energies Alternatives, 75015 Paris (FR)
(72) Inventeur: Maskrot, Hicham, 91310 Montlhery (FR); Chaffron, Laurent, 91360 Villemoisson-Sur-Orge (FR)
(74) Mandataire: Dennemeyer & Associates S.A.

(56) Documents cités:
- CHEN Z S ET AL: "Synthesis and characterization of pyrochlore-type yttrium titanate nanoparticles by modified sol-gel method", BULLETIN OF MATERIALS SCIENCE, SPRINGER INDIA, NEW DELHI, vol. 34, no. 3, 2 septembre 2011 (2011-09-02), pages 429-434, XP035027371, ISSN: 0973-7669, DOI: 10.1007/S12034-011-0116-2
- HICHAM MASKROT ET AL: "Blue TiO{2 -x}/SiO2 nanoparticles by laser pyrolysis", JOURNAL OF NANOPARTICLE RESEARCH ; AN INTERDISCIPLINARY FORUM FOR NANOSCALE SCIENCE AND TECHNOLOGY, KLUWER ACADEMIC PUBLISHERS, DO, vol. 8, no. 3-4, 18 mai 2006 (2006-05-18), pages 351-360, XP019404305, ISSN: 1572-896X, DOI: 10.1007/S11051-005-9016-Y
- J. D. CASEY: "Laser-induced vapor-phase synthesis of titanium dioxide", JOURNAL OF MATERIALS SCIENCE, vol. 22, 1 janvier 1987 (1987-01-01), pages 4307-4312, XP009179964,
- ALEXANDRESCU R ET AL: "TiO2 nanosized powders by TiCl4 laser pyrolysis; TiO2 nanosized powders by TiCl4 laser pyrolysis", NANOTECHNOLOGY, IOP, BRISTOL, GB, vol. 15, no. 5, 17 février 2004 (2004-02-17), pages 537-545, XP020067938, ISSN: 0957-4484, DOI: 10.1088/0957-4484/15/5/023
- COUPE A ET AL: "Dispersion behaviour of laser-synthesized silicon carbide nanopowders in ethanol for electrophoretic infiltration", JOURNAL OF THE EUROPEAN CERAMIC SOCIETY, ELSEVIER SCIENCE PUBLISHERS, BARKING, ESSEX, GB, vol. 32, no. 14, 16 mai 2012 (2012-05-16), pages 3837-3850, XP028427003, ISSN: 0955-2219, DOI: 10.1016/J.JEURCERAMSOC.2012.05.022 [extrait le 2012-05-24]
- GARBOUT ET AL: "Synthesis, X-ray diffraction investigations and spectroscopic analysis of yttrium-substituted pyrochlore oxides Y2-2xBi2xTi2O7 via a sol-gel process", JOURNAL OF CRYSTAL GROWTH, ELSEVIER, AMSTERDAM, NL, vol. 307, no. 1, 25 août 2007 (2007-08-25) , pages 219-228, XP022214391, ISSN: 0022-0248, DOI: 10.1016/J.JCRYSGRO.2007.06.016

## Description

### DOMAINE TECHNIQUE

La présente invention appartient au domaine des poudres d'éléments métalliques.

L'invention concerne plus particulièrement une poudre carbonée à base d'oxyde mixte d'yttrium et de titane.

### ARRIERE-PLAN TECHNIQUE

L'oxyde mixte d'yttrium et de titane Y₂Ti₂O₇ présente une structure pyrochlore de formule générale A₂B₂O₇. Sa conductivité ionique, ainsi que ses propriétés catalytiques et thermomécaniques militent en faveur de son utilisation dans diverses applications, notamment les piles à combustible, la photocatalyse et l'élaboration d'acier renforcé de type ODS.

Par ailleurs, des composés dérivés de l'oxyde mixte d'yttrium et de titane Y₂Ti₂O₇ peuvent également présenter de nouvelles propriétés ou des propriétés modifiées par rapport à l'oxyde mixte d'yttrium et de titane Y₂Ti₂O₇ en tant que tel, ce qui ouvre la voie à de nouvelles applications.

Les caractéristiques physico-chimiques de l'oxyde mixte Y₂Ti₂O₇ et de ses dérivés pourraient être renforcées s'ils étaient disponibles sous forme d'une poudre avec des grains de taille réduite, en particulier d'une nanopoudre.

Or, même si les minéraux ternaires de structure pyrochlore existent à l'état naturel, ils ne peuvent être extraits en grande quantité, sont chimiquement impurs et ne se présentent pas sous forme de poudre à grains nanométriques.

Dès lors, diverses tentatives ont été menées afin de développer des procédés de fabrication de l'oxyde mixte Y₂Ti₂O₇ sous forme d'une poudre dans laquelle la taille des grains est la plus réduite possible.

De manière générale, ces procédés nécessitent le mélange d'un précurseur d'yttrium et d'un précurseur de titane suivi d'une cristallisation menant à l'oxyde mixte. Ils se subdivisent en fonction de l'état physico-chimique des précurseurs qui peuvent être mis en oeuvre sous forme liquide ou solide.

Dans la voie solide, des poudres de précurseurs tels que les oxydes Y₂O₃ et TiO₂ sont mélangées. Le mélange obtenu est traité thermiquement afin de favoriser la diffusion des éléments chimiques et la cristallisation de la phase pyrochlore. Le traitement thermique consiste en général en une succession de paliers de température supérieure à 1000 °C pendant quelques heures à quelques jours pour aboutir à l'oxyde mixte.

Dans la voie liquide, un procédé sol-gel est généralement utilisé dans lequel des précurseurs constitués d'oxydes inorganiques à base d'yttrium et de titane sont mélangés afin de former une solution. Après hydrolyse et polymérisation des précurseurs, la solution se gélifie. Le gel obtenu est ensuite traité thermiquement. La cristallisation qui en résulte mène à l'obtention d'une poudre d'oxyde mixte.

Le traitement thermique de la voie liquide comprend des paliers de températures de nature similaire à ceux de la voie solide. Ces paliers sont toutefois moins nombreux et moins longs, ce qui rend la voie liquide moins énergivore et plus rapide que la voie solide.

Même si les voies solide et liquide présentent chacune des avantages et des inconvénients, elles ont en commun de ne pas conduire à l'obtention d'une poudre d'oxyde mixte présentant un bon degré de pureté, puisque la phase pyrochlore est associée à des phases secondaires telles que l'oxyde d'yttrium (Y₂O₃) ou le rutile (TiO₂). De plus, la poudre obtenue n'est pas constituée de grains de taille moyenne nanométrique à cause du traitement thermique de cristallisation qui provoque inévitablement une croissance des grains.

Les documents « Chen et al., Preparation of Y2Ti2O7 Nanocrystal by Sol-Gel Method and its Characterization, Advanced Materials Research, 2010, vol. 97-101, p. 2175-2179 » [1] et « Chen et al., Synthesis and characterization of pyrochlore-type yttrium titanate nanoparticles by modified sol-gel method, Bulletin of Materials Science, 2011, Vol. 34, No. 3., p. 429-434 » [2] décrivent toutefois un procédé de voie liquide dans lequel une solution sol-gel obtenue en présence d'acide citrique est calcinée à 750 °C afin d'obtenir des grains d'oxyde mixte de structure pyrochlore Y₂Ti₂O₇. Les grains de l'oxyde Y₂Ti₂O₇ présentent une taille moyenne de 20 nm à 50 nm.

Un tel procédé présente l'inconvénient de ne pouvoir conduire à l'obtention de quantités importantes de poudre en vue d'une production à l'échelle industrielle.

Par ailleurs, il n'a pas pour objectif et ne permet à aucune étape d'obtenir des dérivés particuliers de l'oxyde mixte d'yttrium et de titane Y₂Ti₂O₇, en particulier une poudre carbonée comprenant des grains d'oxyde mixte d'yttrium et de titane recouverts d'une couche de carbone.

### EXPOSE DE L'INVENTION

Un des buts de l'invention est donc d'éviter ou d'atténuer un ou plusieurs des inconvénients décrits ci-dessus, en proposant une poudre carbonée comprenant des grains d'oxyde mixte d'yttrium et de titane présentant un bon degré de pureté.

La présente invention concerne ainsi une poudre carbonée comprenant des grains d'oxyde mixte d'yttrium et de titane qui sont recouverts d'une couche de carbone.

La poudre carbonée de l'invention peut notamment être utilisée en tant que produit intermédiaire pour obtenir une poudre d'oxyde mixte. À cet effet, la poudre carbonée est soumise à un traitement thermique supplémentaire dans une atmosphère oxydante vis-à-vis du carbone. La couche de carbone s'oxydant en monoxyde de carbone ou dioxyde de carbone, une poudre d'oxyde mixte d'yttrium et de titane est alors obtenue, en particulier de structure pyrochlore Y₂Ti₂O₇.

L'obtention d'une poudre carbonée comprenant des grains recouverts d'une couche de carbone est inattendue dans la mesure où il s'agit de grains d'oxyde mixte d'yttrium et de titane, en particulier de structure pyrochlore Y₂Ti₂O₇. Une telle structure composite combinant des grains d'oxyde mixte et une couche de carbone n'a pas encore été proposée, notamment parce que l'obtention de la poudre carbonée de l'invention est inattendue.

Les inventeurs ont néanmoins réussi à mettre au point un procédé de fabrication de la poudre carbonée de l'invention en utilisant une étape de pyrolyse laser, le procédé comprenant les étapes successives suivantes :
a) agitation d'une solution précurseur afin d'obtenir une solution sol-gel ; la solution précurseur comprenant un précurseur d'yttrium, un précurseur de titane et au moins un composé additionnel agissant en tant qu'absorbant d'un rayonnement laser et/ou solvant ; les précurseurs étant tels qu'au moins un d'entre eux contient l'élément oxygène et qu'ils sont présents dans la solution précurseur selon une concentration telle que le rapport molaire entre les éléments yttrium et titane correspond au rapport stoechiométrique de ces éléments dans la poudre carbonée ;
b) pyrolyse laser de la solution sol-gel afin d'obtenir la poudre carbonée.

Le procédé de fabrication conduit à l'obtention de la poudre carbonée de l'invention qui comprend des grains d'oxyde mixte d'yttrium et de titane malgré l'utilisation d'une étape de pyrolyse laser. Ces grains forment chacun un noyau d'oxyde mixte qui est recouvert d'une couche de carbone au cours de la pyrolyse laser.

Un tel résultat est inattendu, car il est bien connu que la pyrolyse laser d'un précurseur du titane, tel que le tétraisopropoxyde de titane, conduit à l'obtention de l'oxyde de titane TiO₂ recouvert d'une couche de carbone (noté « TiO₂/C »), comme indiqué par exemple dans le document « JD Casey et al.; Journal of Material Sciences, 1987, vol. 22, p. 4307-4312 » [3]. De manière similaire, on s'attend à ce que la pyrolyse laser d'un précurseur de l'yttrium aboutisse à de l'oxyde d'yttrium recouvert d'une couche de carbone (noté « Y₂O₃/C »).

En l'absence de tout diagramme de phase du système biphasique TiO₂/C + Y₂O₃/C qui permettrait de prévoir une évolution différente, la pyrolyse laser d'un mélange d'un précurseur du titane et d'un précurseur de l'yttrium doit donc logiquement conduire à l'obtention d'une poudre biphasique composée d'une phase TiO₂/C et d'une phase Y₂O₃/C.

Cette approche logique est confirmée par le document « Maskrot et al.; Blue TiO2-x/SiO2 nanoparticles by laser pyrolysis, Journal of Nanoparticle Research, 2006, vol. 8, n° 3-4, p. 351-360 » [4] : pour les éléments silicium et titane introduits selon un rapport molaire égal à 1 qui est pourtant celui de la structure pyrochlore, la pyrolyse laser conduit à des grains d'oxyde monophasiques composés d'une phase TiO₂ ou d'une phase SiO₂, voire des grains d'oxyde biphasiques composés d'une phase TiO₂ et d'une phase SiO₂. En aucun cas des grains d'oxyde mixte de structure complexe telle que la structure pyrochlore ne sont obtenus.

Par analogie, on s'attend donc à ce que l'utilisation de la pyrolyse laser pour les éléments yttrium et titane conduise à la formation d'une poudre biphasique dont les grains recouverts d'une couche de carbone sont composés des deux phases oxydes Y₂O₃ et TiO₂, mais pas à la formation d'une poudre dont des grains ont une structure plus complexe dans laquelle les éléments yttrium et titane forment une solution solide comme celle de la structure pyrochlore.

Les inventeurs sont à leur connaissance les premiers à montrer que la pyrolyse laser d'une solution sol-gel permet contre toute attente d'obtenir un oxyde mixte d'yttrium et de titane sous forme d'une solution solide, les grains de cet oxyde mixte étant recouverts d'une couche de carbone.

### EXPOSE DETAILLE DE L'INVENTION

Dans la présente description de l'invention, un verbe tel que « comprendre », « incorporer », « inclure », « composer » et ses formes conjuguées sont des termes ouverts et n'excluent donc pas la présence d'élément(s) et/ou étape(s) additionnels s'ajoutant aux élément(s) et/ou étape(s) initiaux énoncés après ces termes. Toutefois, ces termes ouverts visent en outre un mode de réalisation particulier dans lequel seul(s) le(s) élément(s) et/ou étape(s) initiaux, à l'exclusion de tout autre, sont visés ; auquel cas le terme ouvert vise en outre le terme fermé « consister en », « constituer de » et ses formes conjuguées.

Par ailleurs, sauf indication contraire, les valeurs aux bornes sont incluses dans les gammes de paramètres indiquées et les températures sont considérées pour une mise en oeuvre à pression atmosphérique.

Le procédé de fabrication de la poudre carbonée de l'invention consiste essentiellement à réaliser la pyrolyse laser d'une solution sol-gel comprenant de l'yttrium et du titane sous une forme appropriée.

Selon l'étape a), on dispose d'une solution précurseur dans laquelle les éléments métalliques yttrium et titane sont présents sous forme de composés qui sont des précurseurs moléculaires sol-gel hydrolysables.

Le précurseur d'yttrium et/ou le précurseur de titane contiennent également de l'oxygène destiné à entrer dans la composition de la poudre carbonée d'oxyde mixte d'yttrium et de titane, en particulier dans la composition des grains d'oxyde mixte.

Chaque précurseur est présent dans la solution précurseur à une concentration telle qu'il permet l'apport des éléments yttrium et titane selon le rapport stoechiométrique que ces éléments présentent dans la poudre carbonée d'oxyde mixte d'yttrium et de titane.

Généralement, le précurseur de titane et/ou le précurseur d'yttrium sont choisis parmi un alcoxyde, un acétonate, un acétate, un carbonyle, un oxyalkyle ou leurs mélanges.

Préférentiellement, le précurseur d'yttrium est l'acétate d'yttrium et/ou le précurseur de titane est un alcoxyde de titane, choisi de préférence parmi le tétraisopropoxyde de titane, le butoxyde de titane ou leur mélange.

La solution précurseur de l'étape a) comprend également au moins un composé additionnel agissant en tant qu'absorbant d'un rayonnement laser et/ou solvant.

Les propriétés d'absorption du rayonnement laser et de solvatation peuvent ainsi être réunies dans au moins un même composé additionnel ou être apportées respectivement par au moins deux composés additionnels distincts.

Le composé additionnel agissant en tant que solvant est généralement un solvant polaire. Il solvate le précurseur d'yttrium qui est sous forme solide, et mène ainsi à une solution homogène comprenant les précurseurs d'yttrium et de titane. Il peut être choisi parmi un alcool, une cétone, un ester, un composé aromatique ou leurs mélanges, et plus particulièrement choisi parmi l'acétate d'éthyle, le xylène ou leur mélange.

Le composé additionnel agissant en tant qu'absorbant d'un rayonnement laser est choisi parmi un photosensibilisateur connu de l'homme du métier, tel que par exemple l'hexafluorure de soufre (SF₆), le méthane, l'éthylène ou leurs mélanges. Il absorbe le rayonnement laser, généralement à une longueur d'onde comprise entre 9,6 µm et 11 µm, plus particulièrement de 10,6 µm. L'énergie ainsi absorbée est ensuite spontanément transmise au milieu réactionnel dont la température s'élève alors afin d'en réaliser la pyrolyse.

Le composé additionnel contenu dans la solution précurseur peut également agir à la fois en tant qu'absorbant d'un rayonnement laser et solvant. Il est alors de préférence choisi parmi l'isopropanol, le butanol ou leur mélange.

La solution précurseur est agitée au cours de l'étape a) afin d'obtenir une solution sol-gel qui est soumise à une pyrolyse laser lors de l'étape b). Au cours de la pyrolyse laser, la solution sol-gel est portée à une température conduisant à la décomposition des précurseurs. Cette température est généralement comprise entre 700 °C et 1500 °C. Au-delà de cette gamme de température, un mélange biphasique d'une structure fluorine et d'une structure pyrochlore peut être obtenu de manière défavorable.

La pyrolyse laser est une méthode souple de synthèse de particules de taille inférieure au micromètre produisant des poudres de grande pureté, décrite par exemple dans la section « *Pyrolyse laser* » de la demande de brevet WO 2009/047423 [5]. Elle peut être réalisée en flux continu, afin d'obtenir des quantités importantes de poudre en vue de l'industrialisation du procédé de fabrication de la poudre carbonée de l'invention.

La pyrolyse laser repose sur l'interaction d'un flux d'aérosol contenant un ou plusieurs précurseurs des particules à synthétiser avec un faisceau laser de forte puissance, généralement un faisceau laser CO₂. Le faisceau laser émet à une longueur d'onde résonnante avec une bande d'absorption d'une molécule présente dans le milieu réactionnel. L'énergie laser ainsi absorbée est ensuite transmise par transfert collisionnel au milieu réactionnel, ce qui aboutit à la décomposition thermique des précurseurs. En raison d'une instabilité thermodynamique de l'aérosol formant une vapeur dite « sursaturée », une germination homogène se produit, suivie par une croissance par coalescence de particules. Le temps d'interaction très court entre le flux de précurseurs et le faisceau laser qui l'intercepte provoque un phénomène de trempe très rapide qui bloque la croissance des grains initiée dans le faisceau, ce qui aboutit à l'obtention de particules.

Préférentiellement, la pyrolyse laser réalisée au cours de l'étape b) du procédé de fabrication est menée à une pression comprise entre 300 mbar et 950 mbar, afin de favoriser une taille réduite des grains de la poudre carbonée.

À l'issue de la pyrolyse laser de la solution sol-gel, la poudre carbonée de l'invention dont les grains sont recouverts d'une couche de carbone est obtenue. Dans la présente description de l'invention, l'expression « poudre carbonée d'oxyde mixte d'yttrium et de titane » désigne une poudre composée de grains d'oxyde mixte d'yttrium et de titane, ces grains étant recouverts d'une couche de carbone.

La couche de carbone de la poudre carbonée de l'invention a généralement une épaisseur moyenne comprise entre 1 nm et 2 nm.

De préférence, elle recouvre la totalité de la surface de chacun des grains d'oxyde mixte d'yttrium et de titane.

Dans les grains d'oxyde mixte, l'yttrium et le titane forment une solution solide.

Par exemple, les grains d'oxyde mixte yttrium et de titane de la poudre carbonée de l'invention comprennent Y₂Ti₂O₇, YTi₂O₅ ou leur mélange, préférentiellement la structure pyrochlore Y₂Ti₂O₇.

Préférentiellement, ils ont une structure monophasique, à savoir qu'ils sont composés d'une seule phase cristalline, de préférence de structure pyrochlore Y₂Ti₂O₇.

Généralement, ils ont une taille moyenne comprise entre 10 nm et 400 nm, préférentiellement entre 10 nm et 80 nm afin de constituer une nanopoudre.

La poudre carbonée de l'invention est donc de préférence une nanopoudre carbonée.

Dans la présente description de l'invention, on entend désigner par « taille moyenne » la valeur moyenne du diamètre des particules lorsqu'elles sont substantiellement sphériques, ou la valeur moyenne de leur plus grande dimension lorsqu'elles ne sont pas substantiellement sphériques.

La taille moyenne peut être mesurée à l'aide d'une technique connue de l'homme du métier telle que la Microscopie Electronique en Transmission (MET) ou la méthode de Scherrer exploitant la largeur à mi-hauteur des raies de diffraction X.

De par la présence de la couche de carbone, la poudre carbonée de l'invention constitue un produit intermédiaire pour obtenir une poudre d'oxyde mixte. Afin de supprimer la couche de carbone afin qu'elle s'oxyde en monoxyde ou dioxyde de carbone et ainsi obtenir une poudre d'oxyde mixte d'yttrium et de titane, le procédé de fabrication peut comprendre, après l'étape b), une étape c) appliquée sur la poudre carbonée. Au cours de l'étape c), on réalise un traitement thermique supplémentaire dans une atmosphère oxydante vis-à-vis du carbone.

L'atmosphère oxydante comprend par exemple de l'air ou de l'oxygène.

Le traitement thermique supplémentaire est généralement réalisé à une température comprise entre 300 °C et 500 °C. Afin d'obtenir un bon degré de pureté, il doit être réalisé jusqu'à l'obtention de la poudre d'oxyde mixte d'yttrium et de titane, sa poursuite au-delà de cette obtention n'étant toutefois pas rédhibitoire. Néanmoins, il est généralement suffisant que le traitement thermique supplémentaire soit réalisé pendant une durée comprise entre 60 minutes et 180 minutes.

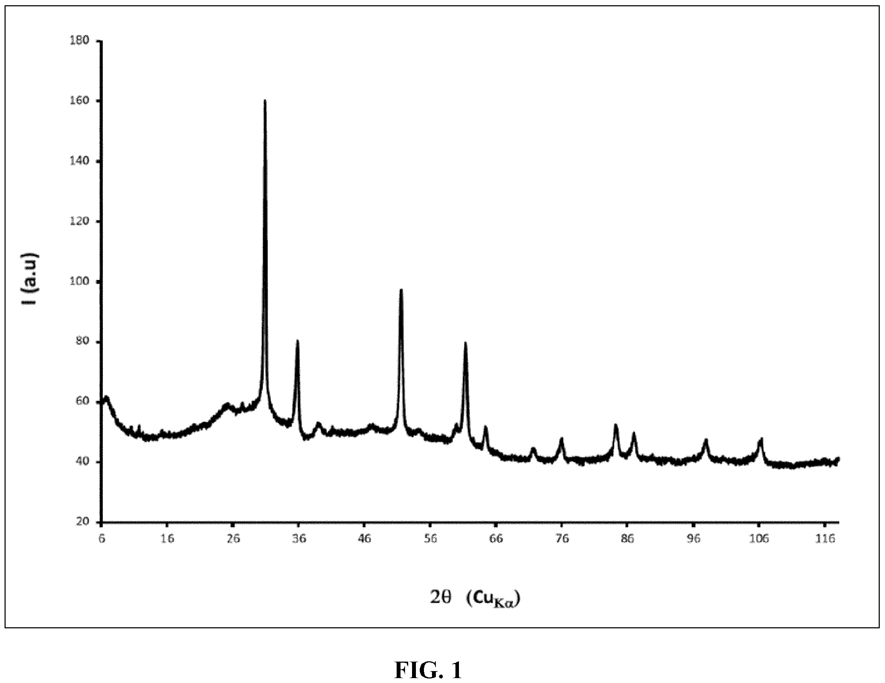

D'autres objets, caractéristiques et avantages de l'invention vont maintenant être précisés dans la description qui suit de modes de réalisation particuliers de la poudre carbonée de l'invention, donnés à titre illustratif et non limitatif, en référence aux Figures 1 à 3 annexées.

### BREVE DESCRIPTION DES FIGURES

Les figures représentent le diffractogramme de rayons X (Figure 1) et les clichés MET (Figures 2 et 3) résultant de l'analyse de la poudre d'oxyde mixte obtenue après suppression de la couche de carbone d'une poudre carbonée de l'invention de structure pyrochlore.

### EXPOSE DE MODES DE REALISATION PARTICULIERS

10 g de tétraisopropoxyde de titane liquide et 9 g d'une poudre d'acétate d'yttrium en tant que précurseurs sont mélangés à 300 ml d'isopropanol agissant en tant qu'absorbant d'un rayonnement laser et solvant. Le rapport massique entre le précurseur de titane et le précurseur d'yttrium permet d'introduire le même nombre de moles d'yttrium et de titane dans le solvant, afin de viser le rapport stoechiométrique égal à 1 de la phase pyrochlore.

La solution précurseur obtenue est agitée pendant 1 heure avec un barreau magnétique afin d'aboutir à une solution sol-gel.

La solution sol-gel est nébulisée sous forme d'un aérosol. La nébulisation est réalisée à l'aide d'une pastille piézoélectrique dont les ondes ultrasonores émises induisent un phénomène de cavitation aboutissant à la formation de gouttelettes. Un débit de 4 litres/minutes d'un gaz porteur constitué d'argon conduit l'aérosol formé au travers d'une buse d'injection de section rectangulaire 10 x 27 mm² insérés au centre d'une buse de confinement de section rectangulaire 22 x 39 mm². Un gaz inerte tel que l'argon est injecté dans l'espace situé entre la buse d'injection et la buse de confinement afin de créer un flux gazeux de confinement autour de la flamme de pyrolyse.

Le flux de gouttelettes débouche ensuite dans une chambre de pyrolyse comprenant une atmosphère d'argon à la pression de 900 mbar. Il entre alors en interaction avec un faisceau émis par un laser d'une puissance de 2600 W et d'une longueur d'onde de 10,6 µm. La tache focale du faisceau présente une section de 10 x 30 mm². Dans ces conditions, le flux absorbe une énergie de 174 W.

Après 1 heure de pyrolyse laser, on obtient 11 g d'une poudre constituée de grains d'oxyde mixte d'yttrium et de titane recouverts d'une couche de carbone. L'épaisseur moyenne de la couche de carbone est de 1 nm.

La poudre carbonée est ensuite soumise à un traitement thermique supplémentaire sous air à 500 °C pendant 1 heure. Ce traitement supprime la couche de carbone afin qu'elle s'oxyde en monoxyde de carbone ou dioxyde de carbone. Il conduit à l'obtention d'une poudre d'oxyde mixte d'yttrium et de titane.

Le diffractogramme de la poudre d'oxyde mixte est représenté sur la Figure 1. Il présente des pics de diffraction correspondant à la seule structure pyrochlore Y₂Ti₂O₇, confirmant l'absence de phase secondaire et la pureté de la poudre. La taille moyenne des grains calculée à l'aide de la méthode de Scherrer est de 20 nm.

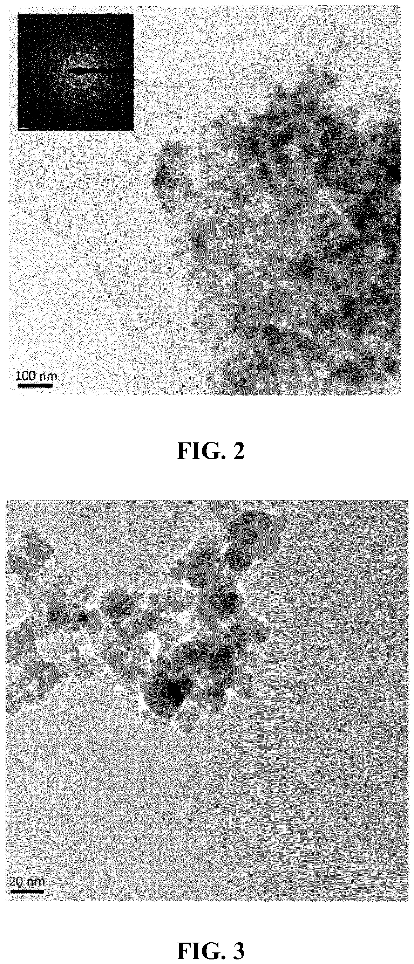

Les clichés MET représentés sur les Figures 2 et 3 indiquent que cette poudre est une nanopoudre dont les grains de forme substantiellement sphérique ont une taille moyenne généralement inférieure à 20 nm.

Puisque la suppression de la couche de carbone ne modifie pas substantiellement les caractéristiques des grains d'oxyde mixte d'yttrium et de titane, ces résultats confirment que ces grains, lorsqu'ils sont recouverts d'une couche de carbone dans la poudre carbonée, ont une structure pyrochlore Y₂Ti₂O₇ et une taille moyenne de 20 nm.

Il ressort de la description qui précède qu'il est possible de disposer d'une poudre carbonée d'oxyde mixte d'yttrium et de titane de structure complexe présentant un bon degré de pureté, tout en accédant aux avantages de la pyrolyse laser qu'est la production en continu de poudre avec un rendement élevé.

### REFERENCES CITEES

[1] Chen et al., Préparation of Y2Ti2O7 Nanocrystal by Sol-Gel Method and its Characterization, Advanced Materials Research, 2010, Vol. 97-101, p. 2175-2179.
[2] Chen et al., Synthesis and characterization of pyrochlore-type yttrium titanate nanoparticles by modified sol-gel method, Bulletin of Materials Science, 2011, Vol. 34, No. 3., p. 429-434.
[3] JD Casey et al.; Journal of Material Sciences, 1987, vol. 22, p. 4307-4312.
[4] Maskrot et al.; Blue TiO2-x/SiO2 nanoparticles by laser pyrolysis, Journal of Nanoparticle Research, 2006, vol. 8, n° 3-4, p. 351-360.
[5] WO 2009/047423

## Revendications

1. Poudre carbonée comprenant des grains d'oxyde mixte d'yttrium et de titane qui sont recouverts d'une couche de carbone.

2. Poudre carbonée selon la revendication 1, dans lequel les grains d'oxyde mixte d'yttrium et de titane comprennent Y₂Ti₂O₇, YTi₂O₅ ou leur mélange.

3. Poudre carbonée selon la revendication 1 ou 2, dans lequel les grains d'oxyde mixte d'yttrium et de titane ont une structure monophasique.

4. Poudre carbonée selon l'une quelconque des revendications précédentes, dans lequel les grains d'oxyde mixte d'yttrium et de titane ont une taille moyenne comprise entre 10 nm et 400 nm.

5. Poudre carbonée selon la revendication 4, dans lequel les grains d'oxyde mixte d'yttrium et de titane ont une taille moyenne comprise entre 10 nm et 80 nm.

6. Poudre carbonée selon l'une quelconque des revendications précédentes, dans lequel ladite couche de carbone a une épaisseur moyenne comprise entre 1 nm et 2 nm.

7. Poudre carbonée selon l'une quelconque des revendications précédentes, dans lequel ladite couche de carbone recouvre la totalité de la surface de chacun des grains d'oxyde mixte d'yttrium et de titane.

## Patentansprüche

1. Kohlenstoffhaltiges Pulver, umfassend Körner aus Yttrium- und Titanmischoxid, die mit einer Kohlenstoffschicht bedeckt sind.

2. Kohlenstoffhaltiges Pulver nach Anspruch 1, wobei die Körner aus Yttrium- und Titanmischoxid, Y₂Ti₂O₇, YTi₂O₅ oder ihre Mischung umfassen.

3. Kohlenstoffhaltiges Pulver nach Anspruch 1 oder 2, wobei die Körner aus Yttrium- und Titanmischoxid eine monophasige Struktur aufweisen.

4. Kohlenstoffhaltiges Pulver nach einem beliebigen der vorhergehenden Ansprüche, wobei die Körner aus Yttrium- und Titanmischoxid eine mittlere Größe aufweisen, die im Bereich zwischen 10 nm und 400 nm liegt.

5. Kohlenstoffhaltiges Pulver nach Anspruch 4, wobei die Körner aus Yttrium- und Titanmischoxid, eine mittlere Größe aufweisen, die im Bereich zwischen 10 nm und 80 nm liegt.

6. Kohlenstoffhaltiges Pulver nach einem beliebigen der vorhergehenden Ansprüche, wobei die Kohlenstoffschicht eine mittlere Dichte aufweist, die im Bereich zwischen 1 nm und 2 nm liegt.

7. Kohlenstoffhaltiges Pulver nach einem beliebigen der vorhergehenden Ansprüche, wobei die Kohlenstoffschicht die Gesamtheit der Oberfläche jedes der Körner aus Yttrium- und Titanmischoxid abdeckt.

## Claims

1. Carbon powder comprising grains of mixed yttrium and titanium oxide coated with a carbon layer.

2. The carbon powder according to claim 1, wherein the grains of mixed yttrium and titanium oxide comprise Y₂Ti₂O₇, YTi₂O₅ or mixture thereof.

3. The carbon powder according to claim 1 or 2, wherein the grains of mixed yttrium and titanium oxide have a single-phase structure.

4. The carbon powder according to any of the preceding claims, wherein the grains of mixed yttrium and titanium oxide have a mean size of between 10 nm and 400 nm.

5. The carbon powder according to claim 4, wherein the grains of mixed yttrium and titanium oxide have a mean size of between 10 nm and 80 nm.

6. The carbon powder according to any of the preceding claims, wherein said carbon layer has a mean thickness of between 1 nm and 2 nm.

7. The carbon powder according to any of the preceding claims, wherein said carbon layer covers the entirety of the surface of each of the grains of mixed yttrium and titanium oxide.
